Europäisches Patentamt

European Patent Office

Office européen des brevets

(19)

(11) EP 0 703 705 B1

(12) **EUROPEAN PATENT SPECIFICATION**

(45) Date of publication and mention
of the grant of the patent:
**01.12.1999 Bulletin 1999/48**

(51) Int Cl.$^6$: **H04N 5/44**

(21) Application number: **95113425.3**

(22) Date of filing: **26.08.1995**

(54) **A method for interpolation of a video picture**

Verfahren zum Interpolieren eines Videobildes

Procédé d'interpolation d'une image vidéo

(84) Designated Contracting States:
**DE FR GB IT**

(30) Priority: **20.09.1994 FI 944353**

(43) Date of publication of application:
**27.03.1996 Bulletin 1996/13**

(73) Proprietor: **NOKIA TECHNOLOGY GmbH
75175 Pforzheim (DE)**

(72) Inventor: **Salonen, Jouni
FIN-33820 Tampere (FI)**

(56) References cited:
**EP-A- 0 391 094        EP-A- 0 477 823
EP-A- 0 564 957**

**Description**

The present invention relates to a method for interpolation of a video picture. In this method, the video picture presented as digital sample values is enhanced by adding new sample values, which are formed from the existing sample values with some interpolation method. The invention particularly relates to an adaptive and primarily non-linear interpolation method.

The interpolation of a video picture is applied to television in particular. The video signal of the current television standards is interlaced, which means that the video picture consists of two alternating fields, one of which contains the odd number lines and the other the even lines. The field frequency is 50 or 60 Hz. The interlacing and the low field frequency cause clearly visible errors in the television picture. The most typical errors are line flicker and line drift. Line flicker can be seen at the frequency of 25 Hz in a picture with a field frequency of 50 Hz, and it occurs at horizontal, light and sharp edges. Line drift can occur when the picture has a slowly moving, light and sharp line, which is almost horizontal or slightly bent. Due to the interlacing, the line is cut into segments, because the part which is covered by the field to be scanned is shown light and the part which was covered by the previous field is shown darker. The result is that the segments seem to "drift" in the direction of the edge line. This phenomenon can be seen clearly in televised athletic contests, for example, where the track lines seem to be running together with the runners. A third typical error is field flicker, which occurs when the field is mostly light, whereby the intensity of the field to be scanned is distinct from the previous field. This is seen in such a way that the whole picture flickers at a frequency of 25 Hz. In addition to the said errors, a line raster can be seen on the screen when it is viewed from a short distance.

Many enhancing or upward converting methods have been developed to eliminate the said errors. These are interpolation methods by which the line frequency is typically doubled, whereby the picture can be shown progressively, for example, so that all lines of the picture are shown at a frequency of 50 Hz. The interpolation methods for calculating new samples from the existing samples can be roughly divided into linear and non-linear methods. In the linear methods, the samples to be added are calculated with some fixed, linear formula, for example as an average value, from the neighboring samples. Non-linear methods include median filtering and various adaptive methods, in which the algorithm used in interpolation can vary.

A disadvantage of the linear methods is their tendency to blur the details of the picture, and their implementation is often rather expensive. On the other hand, they operate reliably on the whole frequency band for which they are intended, i.e. the folding of the signal is minimal. A disadvantage of the non-linear methods is the folds produced, which are generally very visible. On the other hand, the advantages of the said methods include simple implementation and the sharpness of the picture produced. In this connection, folding means that the method produces signal components which the signal did not have originally. Linear methods have also been combined with non-linear methods. One example is EP 0 391 094 A2. This document describes a method and interpolator for digital interpolation of a pixel, wherein a quincunx sub-sampled digital video signal is converted to an orthogonally sampled signal, signals representative of the pixels neighboring the pixel to be interpolated being taken via delay means to the inputs of a linear filter and combined therein, weighted in a predetermined manner. At a point after the linear filter, a non-linear filter in which, on the one hand, the output signal of the linear filter and, on the other hand, some of the said signals representative of the pixels neighboring the pixel are combined, the output signal of the non-linear filter represents the pixel to be interpolated.

Median filtering, which this patent application primarily refers to, means that at a certain window, samples of the current or previous field around the sample to be added are selected as the input of the median filter, and the output is the median of these selected sample values, which becomes the value of the sample to be added. According to the number of samples taken as the input of the median filter, the filtering is either 3-point, 5-point or 7-point filtering. If the sample pixels are selected vertically or, correspondingly, in the direction of the diameter, the method is called vertical or diagonal filtering, respectively. On one hand, the larger the interpolation window used in median filtering is, the more the quality of the interpolation result varies within the picture or between pictures, that is to say that the interpolation can either succeed very well or well, but it can also fail and produce clear errors in the picture. If, on the other hand, the interpolation window is small, i.e. only a small number of adjacent samples are used for the interpolation, the result is more even quality, which means that the interpolation is usually not very good but not very poor, either.

As was stated earlier, the object of the present invention is to provide an adaptive and non-linear method for interpolation of a video picture. In the following, two known, adaptive interpolation methods are studied briefly as prior art examples. The first method is developed by Philips and known as ALFRED (Adaptive Line Flicker Reduction). It uses two interpolation algorithms, vertical linear averaging and vertical 3-point median filtering. The use of the algorithms is controlled so that median filtering, which is the primary method, is not used when strong signal components occur in the frequency band in which its use can result in folding. The principle of the method is to monitor the energy of signal components in the critical frequency band, and in accordance with this to change the interpolation algorithm when necessary. As one disadvantage of this method, the use of only vertical filtering causes serration in the inclined edges of the picture. Another disadvantage is the fact that switching between the linear and the non-linear filter is not simple, and it easily causes more errors in the picture than using only one filter.

Another known adaptive method is DDMF (Direction Dependent Median Filtering). The principle of the method is that before deciding which direction is used in median filtering, the close environment of the sample is measured with the purpose of indicating the direction of the edge possibly occurring in it. The direction of interpolation is selected on the basis of the measurement made. In other words, the environment is studied first, and then it is decided which method of filtering will be applied. Such an adaptive method is e.g. described in EP0 391 094 A2, a video pixel interpolator generates interpolation pixels from incoming picture image pixels for use within a television picture scan line doubler system. The interpolator includes a temporal median filter for generating an interpolation pixel by selection of the median one of a plurality of temporal pixel samples derived from incoming video, an intra-field averager means for generating an intra-field pixel average, and a switch connected to switch an input to a line doubler of the system between outputs of the temporal median filter and the intra-field averager in response to detection of pixel motion within the picture image. An advantage of this method compared to ALFRED is the fact that, in principle, inclined edges can be straightened and they can generally be produced without serration. Although the principle of the method is simple, its use requires, especially with high-frequency signal components, a lot of monitoring and testing to avoid selecting the wrong direction of interpolation after all, in which case the errors are very clear. The implementation of the method in practice is thus very complicated.

The object of the invention is to provide an adaptive interpolation method, by which the disadvantages of the above prior art adaptive methods are avoided, which is based on a simple principle, and by which an interpolation result with a high quality and as faultless as possible is achieved. In order to accomplish this, the adaptive method for interpolation of a video picture in accordance to the invention is defined in claim 1.

In the embodiment of the invention, which is regarded as the best, the primary filtering is non-linear interpolation with a relatively large window, for example 7-point median filtering. In most cases, this method gives a high-quality interpolation result, which nevertheless has clear errors particularly at vertical edges. Therefore, the method of the invention also uses an alternative interpolation method, in this embodiment 3-point vertical median filtering, which is applied in cases where the primary filtering gives a poor result. A simple test is applied to the result of the primary filtering with regard to the samples of the environment. If the test shows that the result differs too much from the environment, the sample value in question will be with the alternative interpolation method, which is selected so that it efficiently corrects the errors that are likely to occur with the primary method.

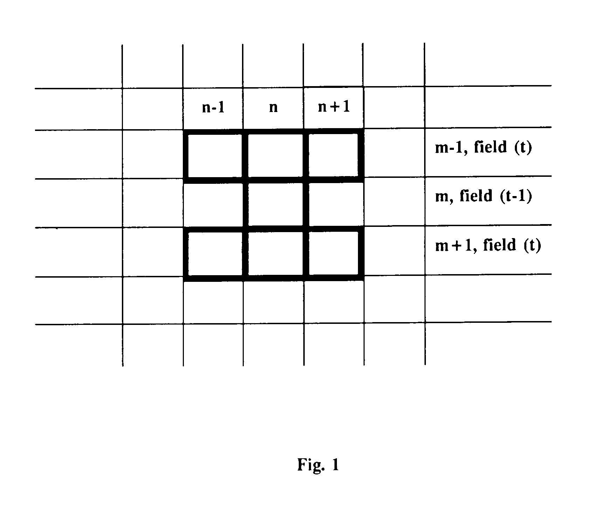

The invention and particularly one embodiment thereof which is regarded as the best will be described below in greater detail with reference to the accompanying Figure 1, showing the window used in median filtering.

Figure 1 shows the most commonly used 3*3 pixel window, in which the sample value $I(n,m,t)$ of the current field (field $t$) to be added in the middle of the window is determined. The letter $n$ indicates the location of the sample on the line, $m$ indicates the number of the line and $t$ indicates that the current field is in question. In the most commonly used methods, the input of the median filter can consist of sample values of the current field $t$ on the upper line $m$-l and on the lower line $m$+1 at points $n$-1, $n$ and $n$+1, and the sample value of the previous field $t$-1 on line $m$ at point $n$. In 7-point median filtering, the input includes all these sample values, in 5-point filtering, the values at point $n$ on the upper and lower line are omitted, and 3-point filtering includes, in addition to the sample value of the previous field in the middle, one sample value on the upper and one on the lower line in any direction. The so called 9-point median filtering is obtained from the 7-point filtering by weighting the samples to be included or their average value in some suitable way.

The 7-point and 5-point and the vertical 3-point median filtering are shown mathematically as follows:

$$I(n,m,t) = MED7 \begin{bmatrix} I(n-1,m-1,t) & I(n,m-1,t) & I(n+1,m-1,t) \\ & I(n,m,t-1) & \\ I(n-1,m+1,t) & I(n,m+1,t) & I(n+1,m+1,t) \end{bmatrix}$$

$$I(n,m,t) = MED5 \begin{bmatrix} I(n-1,m-1,t) & & I(n+1,m-1,t) \\ & I(n,m,t-1) & \\ I(n-1,m+1,t) & & I(n+1,m+1,t) \end{bmatrix}$$

$$I(n,m,t) = MED3\begin{bmatrix} I(n,m-1,t \\ I(n,m,t-1) \\ I(n,m+1,t) \end{bmatrix}$$

where $I(n,m,t)$ is the value of the sample at location $n$ on line $m$ of field $t$.

If a large-window filter is used, with 7 or 5 pixels, for example, the interpolation result obtained is usually good, but these filters have a tendency to fold the signal at high horizontal and diagonal frequencies. As a result, folds or errors occur particularly at the vertical edges of the picture. In spite of this, the method according to the invention primarily uses the interpolation method which usually gives a good interpolation result. In the embodiment that is regarded as the best at present, the method is 7-point median filtering, but each sample value produced by interpolation is tested against its environment. If the test shows that the sample value differs from the environment too much, an alternative method, which is particularly suited to correct errors that are likely to occur, is used, that is to say, 3-point vertical median filtering in the primary embodiment.

In the embodiment regarded as the best, the interpolated sample value obtained is tested by calculating vertically the absolute difference signal, which measures the difference of the interpolated sample value from the environment determined by the sample values above and below. The primary embodiment of the invention is presented mathematically as follows:

$$I(n,m,t) = MED7\begin{bmatrix} I(n-1,m-1,t) & I(n,m-1,t) & I(n+1,m-1,t) \\ & I(n,m,t-1) & \\ I(n-1,m+1,t) & I(n,m+1,t) & I(n+1,m+1,t) \end{bmatrix}$$

If now abs($I(n,m$-1$,t)$ - $I(n,m,t)$) - abs($I(n,m$-1$,t)$ - $I(n,m$+1$,t)$) > $thr$, then

$$I(n,m,t) = MED3\begin{bmatrix} I(n,m-1,t) \\ I(n,m,t-1) \\ I(n,m+1,t) \end{bmatrix}$$

otherwise $I(n,m,t) = I(n,m,t)$,

where $thr$ is the threshold value set for the difference signal.

When the method according to the primary embodiment of the invention was tested on a video signal having 8-bit samples, the threshold value $thr$ used was 8. Using this value, the folds that occurred after the primary interpolation could be efficiently removed by means of the adaptive interpolation.

A detailed description of an embodiment of the invention which is regarded as the best has been given above, but a person skilled in the art will understand that in an adaptive method for interpolation of a video picture, both the primary and the secondary interpolation method and the test used for testing the sample value obtained with the primary interpolation method against the surrounding values can vary in many ways.

In the method of the invention, it is essential that the sample value obtained by means of the primary interpolation method, which is recommended as generally giving a good result of interpolation, is tested by determining whether it differs more than is allowed from the surrounding sample values, and if so, an alternative interpolation method is used, the alternative method being preferably a method which efficiently corrects the errors that are likely to occur when the primary method is used. A skilled person will also understand that in principle there can be more than one alternative methods, in which case the interpolation result obtained by means of the alternative method is further tested against the environment, and if the test result so requires, another alternative method of interpolation is used, or, on the basis of testing the output from the primary method, one of the alternative methods is chosen. The invention can vary within the scope defined by the attached claims.

**Claims**

1. A method for interpolation of a video picture in order to define a sample value for each sample to be interpolated from the values of samples that are either spatially or temporally close to it, comprising a first interpolation method and a second interpolation method, **characterized** in that

   a sample value for each sample to be interpolated is defined by means of the first interpolation method, the differences between a thus interpolated sample value from selected surrounding values are calculated and the interpolated output sample value is replaced by a sample value defined by means of the second interpolation method, if one of the differences exceeds a set limit.

2. A method for interpolation of a video picture according to claim 1, **characterized** in that at least one of the first and the second interpolation methods is a non-linear method.

3. A method for interpolation of a video picture according to claim 1 or 2, **characterized** in that

   the first interpolation method is non-linear and determines the sample value from more than three samples close to it spatially or temporally, the second interpolation method has been chosen so that it replaces the interpolated sample value obtained by means of the first interpolation method by a sample value which has differences to the test environment formed by selected close samples below the set limit.

4. A method for interpolation of a video picture according to claim 3, **characterized** in that

   the first interpolation method is 7-point median filtering, the environment used for calculating difference values is formed by the simultaneous vertically closest sample above and the vertically closest sample below and the second interpolation method is vertical, 3-point median filtering.

5. A method for interpolation of a video picture according to one of the above claims, **characterized** in that the differences of the interpolated output sample value from the environment formed by selected close samples is calculated by defining the absolute difference signal abs($I(n,m$-1$t)$ - $I(n,m,t)$) -abs($I(n,m$-1,$t)$ - $I(n,m$+1,$t)$) and comparing it to the set threshold value, whereby $I(n,m,t)$ is the interpolated sample value determined by means of the first interpolation method, $I(n,m$-1,$t)$ is the simultaneous, vertically closest sample above the sample to be interpolated, and $I(n,m$+1,$t)$ is the simultaneous, vertically closest sample below the sample to be interpolated.

6. A method for interpolation of a video picture according to claim 5, **characterized** in that the set threshold value is 8, when the sample value is determined by 8 bits.

7. A method according to any of the preceding claims, **characterized** in that also

   the differences of the interpolated output sample value and the environment formed by selected close samples is again calculated and the output sample value is replaced by a sample value determined by an interpolation method used together with this testing, different from the first and the second method, if the difference exceeds the set limit.

**Patentansprüche**

1. Verfahren zum Interpolieren eines Videobildes, um einen Abtastwert für jede zu interpolierende Probe anhand der Werte von Proben zu definieren, die dieser entweder räumlich oder zeitlich naheliegen, umfassend ein erstes Interpolationsverfahren und ein zweites Interpolationsverfahren, dadurch gekennzeichnet daß

   ein Abtastwert für jede zu interpolierende Probe mit dem ersten Interpolationsverfahren definiert wird, wobei die Differenzen zwischen einem so interpolierten Abtastwert und ausgewählten umgebenden Werten errechnet werden und der interpolierte Ausgangsabtastwert durch einen mit dem zweiten Interpolationsverfahren definierten Abtastwert ersetzt wird, wenn eine der Differenzen einen gesetzten Schwellenwert überschreitet.

2. Verfahren zum Interpolieren eines Videobildes nach Anspruch 1, dadurch gekennzeichnet, daß wenigstens das erste oder das zweite Interpolationsverfahren ein nichtlineares Verfahren ist.

3. Verfahren zum Interpolieren eines Videobildes nach Anspruch 1 oder 2, dadurch gekennzeichnet, daß

das erste Interpolationsverfahren nichtlinear ist und den Abtastwert aus mehr als drei Proben bestimmt, die räumlich oder zeitlich naheliegen,
das zweite Interpolationsverfahren so gewählt wurde, daß es den erhaltenen interpolierten Abtastwert mit dem ersten Interpolationsverfahren durch einen Abtastwert ersetzt, der Differenzen unterhalb des gesetzten Schwellenwertes gegenüber der durch ausgewählte naheliegende Proben gebildeten Testumgebung hat.

4. Verfahren zum Interpolieren eines Videobildes nach Anspruch 3, dadurch gekennzeichnet, daß

das erste Interpolationsverfahren eine 7-Punkt-Median-Filterung ist,
die zum Errechnen von Differenzwerten verwendete Umgebung durch die simultane, vertikal nächstliegende Probe darüber und die vertikal nächstliegende Probe darunter gebildet wird, und
das zweite Interpolationsverfahren eine vertikale 3-Punkt-Median-Filterung ist.

5. Verfahren zum Interpolieren eines Videobildes nach einem der obigen Ansprüche, dadurch gekennzeichnet, daß die Differenzen zwischen dem interpolierten Ausgangsabtastwert und der durch gewählte naheliegende Proben gebildeten Umgebung durch Definieren des absoluten Differenzsignals abs $(I(n,m-1,t)-I(n,m,t))$ -abs$(I(n,m-1,t)-I(n,m+1,t))$ und Vergleichen desselben mit dem eingestellten Schwellenwert errechnet wird, wobei $I(n, m, t)$ der mit dem ersten Interpolationsverfahren ermittelte interpolierte Abtastwert, $I(n,m-1, t)$ die gleichzeitige, vertikal nächstliegende Probe über der zu interpolierenden Probe und $I(n,m+1, t)$ die gleichzeitige, vertikal nächstliegende Probe unter der zu interpolierenden Probe ist.

6. Verfahren zum Interpolieren eines Videobildes nach Anspruch 5, dadurch gekennzeichnet, daß der eingestellte Schwellenwert 8 ist, wenn der Abtastwert durch 8 Bits bestimmt wird.

7. Verfahren nach einem der vorherigen Ansprüche, dadurch gekennzeichnet, daß auch

die Differenzen zwischen dem interpolierten Ausgangsabtastwert und der durch gewählte naheliegende Proben gebildeten Umgebung wieder berechnet wird, und
der Ausgangabtastwert durch einen Abtastwert ersetzt wird, der durch ein Interpolationsverfahren ermittelt wird, das zusammen mit diesem Test verwendet wird, der sich von dem ersten und dem zweiten Verfahren unterscheidet, wenn die Differenz den gesetzten Schwellenwert überschreitet.

## Revendications

1. Procédé d'interpolation d'une image vidéo afin de définir une valeur d'échantillon pour chaque échantillon à interpoler à partir des valeurs d'échantillons qui sont proches de lui soit spatialement soit temporellement, comprenant un premier procédé d'interpolation et un second procédé d'interpolation, caractérisé en ce que :

une valeur d'échantillon pour chaque échantillon à interpoler est définie au moyen du premier procédé d'interpolation,
les différences entre une valeur d'échantillon ainsi interpolé et les valeurs qui l'entourent sélectionnées sont calculées et,
la valeur d'échantillon interpolé de sortie est remplacée par une valeur d'échantillon définie au moyen du second procédé d'interpolation, si l'une des différences dépasse une limite établie.

2. Procédé d'interpolation d'une image vidéo selon la revendication 1, caractérisé en ce qu'au moins l'un des premier et second procédés d'interpolation est un procédé non linéaire.

3. Procédé d'interpolation d'une image vidéo selon la revendication 1 ou 2, caractérisé en ce que :

le premier procédé d'interpolation est non linéaire et détermine la valeur de l'échantillon à partir de plus de trois échantillons proches de lui spatialement ou temporellement,

le second procédé d'interpolation a été choisi de sorte qu'il remplace la valeur d'échantillon interpolé obtenue au moyen du premier procédé d'interpolation par une valeur d'échantillon qui a des différences par rapport à l'entourage de test formé par des échantillons proches sélectionnés au-dessous de la limite établie.

4.  Procédé d'interpolation d'une image vidéo selon la revendication 3, caractérisé en ce que :

le premier procédé d'interpolation est un filtrage moyen en 7 points,
l'entourage utilisé pour calculer des valeurs de différence est formé par l'échantillon le plus proche verticalement au-dessus et, simultané, l'échantillon le plus proche verticalement au-dessous, et
le second procédé d'interpolation est un filtrage moyen en 3 points vertical.

5.  Procédé d'interpolation d'une image vidéo selon l'une des revendications ci-dessus, caractérisé en ce que les différences entre la valeur d'échantillon interpolé de sortie et l'entourage formé par les échantillons proches sélectionnés sont calculées en définissant le signal de différence absolue, $abs(I(n,m-1,t)-I(n,m,t))- abs (I(n,m-1,t)-I(n,m+1,t))$, et en le comparant à la valeur de seuil établie, $I(n,m,t)$ étant ainsi la valeur d'échantillon interpolé déterminée au moyen du premier procédé d'interpolation, $I(n,m-1,t)$ étant l'échantillon le plus proche verticalement, simultané, au-dessus de l'échantillon à interpoler, et $(I(n,m+1,t)$ étant l'échantillon le plus proche verticalement, simultané, au-dessous de l'échantillon à interpoler.

6.  Procédé d'interpolation d'une image vidéo selon la revendication 5, caractérisé en ce que la valeur de seuil établie est 8, quand la valeur d'échantillon est déterminée par 8 bits.

7.  Procédé selon l'une quelconque des revendications précédentes, caractérisé en ce qu'en outre :

les différences entre la valeur d'échantillon interpolé de sortie et l'entourage formé par des échantillons proches sélectionnés sont à nouveau calculées et
la valeur d'échantillon de sortie est remplacée par une valeur d'échantillon déterminée par un procédé d'interpolation utilisé conjointement avec ce test, qui est différent des premier et second procédés, si la différence dépasse la limite établie.

|  | n-1 | n | n+1 |  |  |
|---|---|---|---|---|---|
|  |  |  |  |  | m-1, field (t) |
|  |  |  |  |  | m, field (t-1) |
|  |  |  |  |  | m+1, field (t) |

Fig. 1